# EUROPÄISCHE PATENTSCHRIFT

(11) **EP 0 751 831 B1**
(45) Veröffentlichungstag und Bekanntmachung des Hinweises auf die Patenterteilung: **17.09.1997**
(21) Anmeldenummer: 95912263.1
(22) Anmeldetag: 22.03.1995
(51) Int. Cl.: B03B 9/06, B29B 17/02

(54) **VERFAHREN UND VORRICHTUNG ZUM BEHANDELN VON VERBUNDELEMENTEN**
METHOD AND DEVICE FOR TREATING COMPOSITE ELEMENTS
PROCEDE ET DISPOSITIF POUR LE TRAITEMENT D'ELEMENTS COMPOSITES

(30) Priorität: 23.03.1994 DE 4409982; 21.11.1994 DE 4441309
(43) Veröffentlichungstag der Anmeldung: 08.01.1997
(73) Patentinhaber: Engel, Rudolf, CH-8353 Elgg (CH); Muther, Christoph, CH-6030 Ebikon (CH)
(72) Erfinder: Engel, Rudolf, CH-8353 Elgg (CH); Muther, Christoph, CH-6030 Ebikon (CH)
(74) Vertreter: Hiebsch, Gerhard F., Dipl.-Ing.
(86) Internationale Anmeldenummer: EP9501071
(87) Internationale Veröffentlichungsnummer: WO9525595

(56) Entgegenhaltungen:
- WO-A-93/05883
- DE-A- 4 200 827
- DE-A- 4 213 274
- FR-A- 1 562 613

## Beschreibung

Die Erfindung betrifft ein Verfahren sowie eine Vorrichtung zum Behandeln von Verbundelementen aus festen organischen und/oder anorganischen Verbundwerkstoffen wie Verbunden aus Metall/Metall, Kunststoff/Kunststoff, Metall/Kunststoff oder mineralischen Verbunden mit Metallen und/oder Kunststoffen nach den Oberbegriffen der unabhängigen Patentansprüche.

Verbundelemente dieser Art sind beispielsweise verzinnte Kupferleiterbahnen von Schaltungen, faserverstärkte Kunststoffe oder verkupferte Aluminiumdrähte in koextrudierter oder laminierter Form. So bestehen Metall-Metall-Verbunde -- etwa bei Koaxialkabeln -- vornehmlich aus einem Metallträger, beispielsweise einem Aluminiumdraht, mit einer galvanisch oder thermisch aufgetragenen Kupferschicht, Kunststoff-Kunststoff-Verbunde beim Anwendungsfall Verpackungsfolie für Lebensmittel aus einem von Polyamiden (PA) gebildeten Kunststoffträger mit aufkaschiertem, laminiertem oder koextrudiertem Polyethylen (PE). Auch Kunststoff-Metallverbunde sind miteinander durch einen Kaschier- oder Laminiervorgang verbunden, z. B. bei einer Glasfaserepoxidplatte als Träger mit Kupferauftrag als Basismaterial für gedruckte Schaltungen. Metall-Kunststoffverbunde umfassen u.a. einen Träger aus Aluminiumblech mit einer aufgeklebten Schutzfolie aus Polypropylen (PP) für Fassadenplatten und Wetterschutzverkleidungen.

Probleme bilden diese Verbundelemente vor allem bei der Entsorgung, da bislang ein Trennen der sich im Verbund befindlichen Stoffe nicht stattfindet. Diese Verbundelemente werden heute fast ausschließlich -- in umweltunverträglicher Weise -- verbrannt oder deponiert und so dem Wirtschaftskreislauf entzogen.

Zu den Verbundelementen, welche zukünftig geordnet entsorgt werden müssen, gehören vor allem auch Rückstände aus dem Verpackungsbereich. Gerade dort sind koextrudierte und laminierte Produkte bislang unersetzlich, da die im Verbund befindlichen Werkstoffe in Kombination hervorragende Verpackungseigenschaften besitzen.

Bei konventioneller Aufbereitung erfolgt der Aufschluß des Verbundelementes über die Korn- bzw. Partikelgröße, die kleiner als die jeweilige Schichtdicke der Komponenten ist. Dieser Aufschluß wird in der Regel über eine zumindest einstufige Feinstzerkleinerung in entsprechenden Mühlen --etwa Hammer-, Prall- oder Gegenstrom-Mühlen --durchgeführt, gegebenenfalls mit Unterstützung von Stickstoff zur Inertisierung und Tiefkühlung.

Durch die FR-A-1.562.013 ist eine Zerkleinerungsmühle mit --mehrere Drehscheiben aufweisendem -- Rotor und diesen umfangendem zylindrischem Gehäuse bekannt geworden, bei der zu mahlendes Fördergut durch eine Schraube zum unteren Rotorende geführt und dann vom Luftstrom eines den Rotor -- oberhalb eines Siebbodens und unterhalb des Rotorlagers -- überspannenden Ventilators erfaßt wird. Das aufwärts wandernde Mahlgut wird von sog. palques de broyage, also Mahl- oder Quetschplatten, die radial von drehenden Rotorplatten abragen und nahe der Gehäusewandung angeordnet sind, zerkleinert. Die mit der Gehäusewandung zusammenwirkenden Mahl- und Quetschplatten sind jeweils an ihrem Ende mit einem elliptischen Rahmen ausgestattet; diese Rahmen verlaufen auf einem Konstruktionskreis an der Gehäuseinnenseite und sollen die Mahl- und Zerkleinerungswirkung erhöhen helfen. Im übrigen sollen an diesem Zerkleinerungsvorgang nach Ansicht des Autors jener FR-A 1.562.613 zusätzlich auch Turbulenzen beteiligt sein. An dem Gehäuse dieser Zerkleinerungsmühle setzt unterhalb des Ventilators ein Bypass an, der abgesiebte Grobteile erneut dem unteren Zulauf zuträgt.

Eine derartige Zerkleinerungsmühle offenbart auch die gattungsbildende DE-A-42 13 274, die als Mikrowirbelsichtermühle zur Feinzerkleinerung metallhaltiger Verbundmaterialien, vor allem zur Edelmetallrückgewinnung aus bestücken Leiterplatten eingesetzt wird. Hierbei wird beispielsweise das Kupfer auf etwa 80 bis 100 µm Korngröße zerkleinert und über die Sichterluft ausgetragen. An einer Ausmündung eines Bypasses ist eine Prallkante angeordnet; welche die am Umfang des Rotors strömenden Partikel in die Bypaßmündung umlenkt. Die bei der Drehbewegung des Rotors entstehenden Wirbel sind in der Zeichnung in der Art einer comic strip-Erscheinung dargestellt, ohne daß eine verfahrenstechnische Bedeutung vorgestellt würde.

Schließlich erfaßt die WO-A-9 305 883 einen Verfahrensstammbaum zum Rückgewinnen von Fasern aus glasfaserverstärkten Kunststoffen od. dgl. mit einem Schredder, nach dem das zerkleinerte Gut pulverisiert wird. Aus diesem Pulver werden freigesetzte Fasern separiert und das verbleibende pulverisierte Haufwerk beispielsweise als Füllstoff eingesetzt. In diesem Stammbaum findet sich eine als pulveriser bezeichnete Mikromühle, die in ihrem Aufbau jener aus der FR-A-1.562.013 gleicht.

Der vorliegenden Erfindung liegt die Aufgabe zugrunde, ein Verfahren und eine Vorrichtung der eingangs genannten Art zu entwickeln, mit welchem Verbundelemente so behandelt werden können, daß eine Rückgewinnung von Wertstoffen erfolgt, die Verbundwerkstoffe sollen -- ohne die Umwelt zu belasten -- in die Wirtschaftskreisläufe zurückgebracht zu werden vermögen.

Zur Lösung dieser Aufgabe führt die Lehre der unabhängigen Patentanaprüche; die Unteransprüche geben günstige Weiterbildungen an.

Bei dem erfindungsgemäßen Verfahren wird das Gemisch den Abrißkanten mit einer Beschleunigung von 20 bis 60 m/sec² zugeführt und in den Wirbeln eine das Gemisch beschleunigend aufschließende Bewegung hergestellt, zudem wird während dieses Trenn- oder Aufschließvorganges die Adhäsion zwischen den Komponenten der Feststoffteile durch deren Kraft übersteigende Beschleunigungs- und Reibungikräfte aufgehoben, und es werden die Komponenten der Feststoffteile voneinander unter Trennung der Schichten des genannten Verbundwerkstoffes gelöst bzw. voneinander abgezogen.

Dazu hat es sich als günstig erwiesen, das Gemisch aus Transportfluid und Feststoffpartikeln dem Trenn- oder Aufschließvorgang an der/den Abrißkante/n zuzuführen, nachdem die zu behandelnden Verbundelemente -- bevorzugt auf eine Korngröße von 5 mm bis 30 mm -- zerkleinert oder aber vor dem Trenn- oder Aufschließvorgang verdichtet worden sind.

Die durch dieses Verfahren zu behandelnden Verbundstoffe werden vor dem selektiven Aufschluß zu Partikeln vorzerkleinert, die oberhalb der Korngröße von Feinzerkleinerungen liegen, und dann der Trenn- oder Aufschließzone zugeführt, somit im Luftstrom beschleunigt. Die einzelnen im Verbund befindlichen Stoffe werden freigesetzt, die physikalisch unterschiedlichen metallischen Schichten wie auch die Kunststoffschichten lösen sich voneinander ab. Dieser Ablösevorgang erfolgt entlang der Phasengrenzen.

Vorteilhafterweise sollen während des Trenn- oder Aufschließvorganges eine Prozeßtemperatur zwischen 10° und 75° C, insbesondere etwa Raumtemperatur, und eine Umfangsgeschwindigkeit an der Abrißkante zwischen 50 und 200 m/sec - - bevorzugt 70 und 180 m/sec -- vorhanden sein.

Dank dieser Maßgaben wird in der Trenn- oder Aufschließzone die Adhäsion zwischen den Komponenten der Feststoffpartikel durch deren Kraft übersteigende Beschleunigungs- und Reibungskräfte aufgehoben; das Lösen der Komponenten der Feststoffpartikel voneinander erfolgt bevorzugt unter Wärmezufuhr bzw. unter Flüssigkeits- und/oder Gaseintrag.

Im Rahmen der Erfindung liegen folgende Betriebsparameter in der Trenn- oder Aufschließzone; eine Beschleunigung der Feststoffpartikel zwischen 20 und 60 m/sec², bevorzugt 23 und 53 m/sec², eine Umfangsgeschwindigkeit zwischen 70 und 200 m/sec, bevorzugt 72 bis 180 m/sec, und ein Luftmengendurchsatz zwischen 5000 und 8500 Nm³/h.

So haben sich beispielsweise für Verbundelemente hoher Flächenadhäsion -- etwa ein Tubenlaminat, dessen Aluminiumfolie beidseits mit LDPE (low density polyethylene) beschichtet ist -- Beschleunigungen von 35 bis 40 m/sec², insbesondere etwa 38 m/sec², eine Temperatur von 70 bis 80°C, insbesondere etwa 75°C eine Umfangsgeschwindigkeit von 150 bis 200 m/sec, insbesondere etwa 180 m/sec, sowie ein Luftdurchsatz von 5000 bis 5600 Nm³/h, insbesondere von etwa 5250 Nm³/h, als besonders günstig erwiesen.

Für Innenbekleidungen der Kraftfahrzeugindustrie -- wie Armaturentafeln mit ABS, PUR-Schaum und PVC-Folien -- oder entsprechend aufgebaute Verbunde wurden als Betriebsparameter festgelegt:

Beschleunigungen von 20 bis 30 m/sec², insbesondere etwa 23 m/sec², eine Temperatur von 25 bis 35°C, insbesondere etwa 30°C, eine Umfangsgeschwindigkeit von 68 bis 77 m/sec, insbesondere etwa 72 m/sec, sowie ein Luftdurchsatz von 7800 bis 8500 Nm³/h, insbesondere etwa 8100 Nm³/h.

Für den Bereich beschichteter Drahtkörper wie Aluminiumdrähte mit Metallbeschichtung und PVC-Mantel sollen als Betriebswerte gelten:
eine Beschleunigung von 48 bis 56 m/sec², insbesondere etwa 53 m/sec², eine Temperatur von 35 bis 45°C, insbesondere etwa 40°C, sowie eine Umfangsgeschwindigkeit von 80 bis 90 m/sec, insbesondere etwa 85 m/sec, sowie ein Luftdurchsatz von 6000 bis 7000 Nm³/h, insbesondere von etwa 6320 Nm³/h.

Es wird deutlich, daß die einstellbaren Parameter des Aufschließvorganges an die zu behandelnde Sorte von Feststoffpartikeln angepaßt werden müssen; letztere werden -- wie oben angedeutet -- in Abhängigkeit von ihren unterschiedlichen physikalischen Eigenschaften -- insbesondere der Dichte, Reißdehnung, Rückstellkraft, Wärmeausdehnung und Wärmeübergang sowie der Elastizität und der damit verbundenen molekularen Strukturunterschiede -- selektiv aufgeschlossen, die Adhäsionen der Verbundwerkstoffe untereinander werden aufgehoben.

Durch das selektive Aufschließen erfolgt ein Zerfallen des Verbundelements in unterschiedlichste Strukturen, wobei sich die einzelnen Komponenten bezüglich Dimension und Geometrie infolge ihrer unterschiedlichen Charakteristiken auch unterschiedlich verhalten. Es hat sich gezeigt, daß beim selektiven Aufschließen die Bestandteile aus Polyethylen im wesentlichen unverändert bleiben, während metallische Bestandteile, beispielsweise aus Aluminium -- die vorher in flächiger Form vorlagen -- sich einrollen und zu zwiebelartigen Strukturen deformiert werden. Kunststoffverbunde, beispielsweise Polystyrol-Polyethylen schließen sich -- ohne deutliche Deformation -- in unterschiedliche Strukturen auf mit deutlichen Unterschieden in Bezug auf die Partikelgrößen; diese sind erheblich größer als die erwähnten Zwiebelstrukturen.

Das unterschiedliche Aufschließ- bzw. Deformierungs-Verhalten der Metalle bewirkt, daß sich die einzelnen Bestandteile voneinander ablösen, so daß darauffolgend ein getrenntes Abziehen der Kunststoffe, der mineralischen Faseranteile und der Metallteile ermöglicht wird. So werden etwa die großen Partikel von den kleinen Partikeln getrennt, da die weniger stark aufgeschlossenen Produkte im Sieb verbleiben, während die kleineren Partikel die Maschen passieren. Eine weitere Separation wird in einem Trenntisch und/oder durch ein Fließbett ermöglicht, wobei sich die Strukturen, Dichten sowie geometrische und gravimetrische Unterschiede verfahrensfördernd auswirken.

Das beschriebene selektive Aufschließen erfolgt in einer Vorrichtung, die einen Strömungsweg für das -- aus dem/den Verbundelement/en z.B. auf dem Wege des Zerkleinerns hergestellte -- Feststoffpartikel tragende Transportfluid, anbietet, der von einer quer zur Strömungsrichtung profilierten Wandung sowie einer Schar von aufeinander folgenden, relativ zur Wandung bewegten Werkzeugen begrenzt ist; letztere bilden jeweils in Strömungsrichtung zumindest eine Abrißkante zur Erzeugung eines Heckwirbels aus Transportfluid und Feststofffracht. Bevorzugt drehen sich die Werkzeuge als Teile eines Rotors in einem die Wandung enthaltenden Gehäuse als Stator. Der Aufschluß vollzieht sich in dem walzenartigen Heckwirbel in Abhängigkeit von der Adhäsion und der Schichtdicke der Feststoffpartikel, der Verweilzeit in dieser Aufschließzone und der Umfangsgeschwindigkeit des Rotors sowie der erreichten Intensität der erzeugten Wirbel.

Das vorzerkleinerte Material wird durch Werkzeuge des Rotors im Luftstrom beschleunigt. In den dabei entstehenden Wirbeln -- bis hin in den Ultraschallbereich -- schließt sich das zugeführte Material gegenseitig auf. Die einzelnen im Verbund befindlichen Stoffe werden freigesetzt` die Physikalisch unterschiedlichen metallischen Schichten wie auch die Kunststoffschichten lösen sich voneinander ab. Die Metallschichten rollen sich -- in beschriebener Weise --ein und bauen sich zwiebelartig auf. Der Durchmesser der entstehenden Zwiebelstrukturen wird dabei zum Mehrfachen der Schichtdicke des zuvor flächigen Verbundes. Die Kunststoffschichten erreichen durch ihre unterschiedlichen physikalischen Eigenschaften eine unterschiedliche Struktur und Geometrie zueinander sowie zu den metallischen Schichten, die sich ihrerseits untereinander oder auch zu mineralischen Verbundanteile unterschiedlich verhalten.

Insgesamt arbeitet dieses Verfahren außerordentlich wirkungsvoll und energiesparend. Durch das gegenseitige Aufschließen infolge des Aufeinanderprallens des Materials wird der Verschleiß an den Werkzeugen des Rotors sehr gering gehalten, was sich auf die Standzeit sowie die Verfügbarkeit der Vorrichtung oder entsprechender Anlagen im Betrieb sehr effizient auswirkt. Zu erwähnen ist vor allem, daß die Fraktionen letztendlich in fast reiner Form vorliegen und so äußerst günstig in die Wirtschaftskreisläufe zurückfließen.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
- Fig. 1:: die Draufsicht auf eine Anlage zum Behandeln von Verbundelementen;
- Fig. 2:: die teilweise Seitenansicht zu Fig. 1 nach deren Pfeil II;

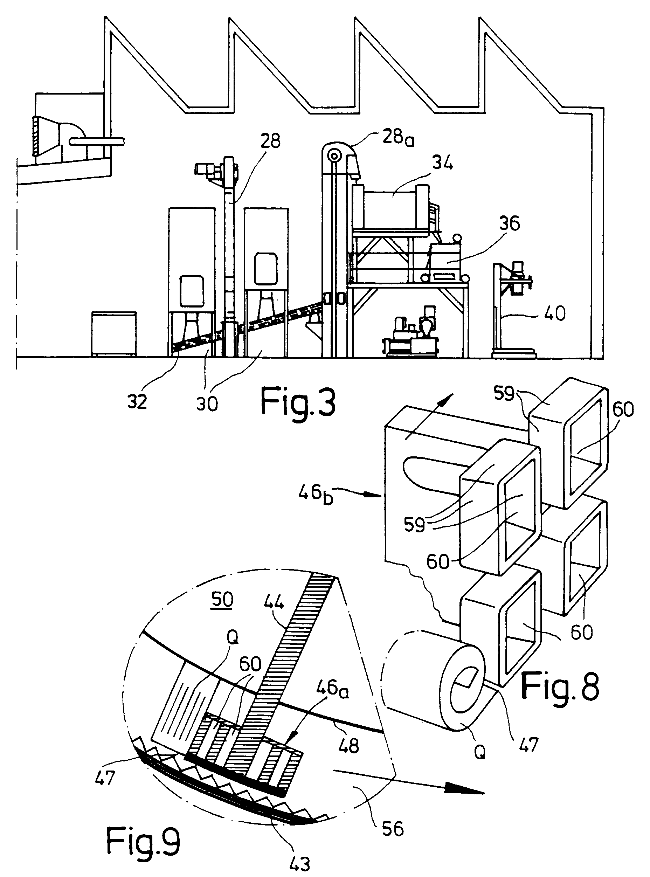

- Fig. 3:: den Schnitt durch Fig. 1 nach deren Linie III-III;
- Fig. 4:: eine Trenn- oder Aufschließeinheit aus der Anlage nach Fig. 1 in teilweise geschnittenem Aufriß;
- Fig. 5:: den Querschnitt durch Fig. 4 nach deren Linie V-V mit vergrößertem Detail;
- Fig. 6 **bis** Fig. 8:: unterschiedliche Ausführungen vergrößerter Werkzeuge der Trenn- oder Aufschließeinheit in Schrägsicht;
- Fig. 9:: einen Schnitt durch einen Teil einer weiteren Trenn- oder Aufschließeinheit;
- Fig. 10:: die Draufsicht auf ein weiteres Werkzeug;
- Fig. 11:: die Seitenansicht zu Fig. 10;
- Fig. 12 **bis** Fig. 14:: Schrägsichten auf Teile von Verbundelementen;
- Fig. 15:: einen Querschnitt durch ein Verbundelement mit Hinweisen auf die Zerkleinerungswirkung;
- Fig. 16:: eine Graphik zur Abhängigkeit des Ablösegrades von der Partikelgröße;
- Fig. 17:: eine Graphik zur Korngrößenverteilung bei einer Zerkleinerung eines Verbundelements aus drei Komponenten;
- Fig. 18:: Verteilung der Korngrößen bei selektivem Aufschluß in der Trenn- oder Aufschließeinheit;
- Fig. 19:: eine Graphik zur Separation selektiv aufgeschlossener Verbundwerkstoffe.

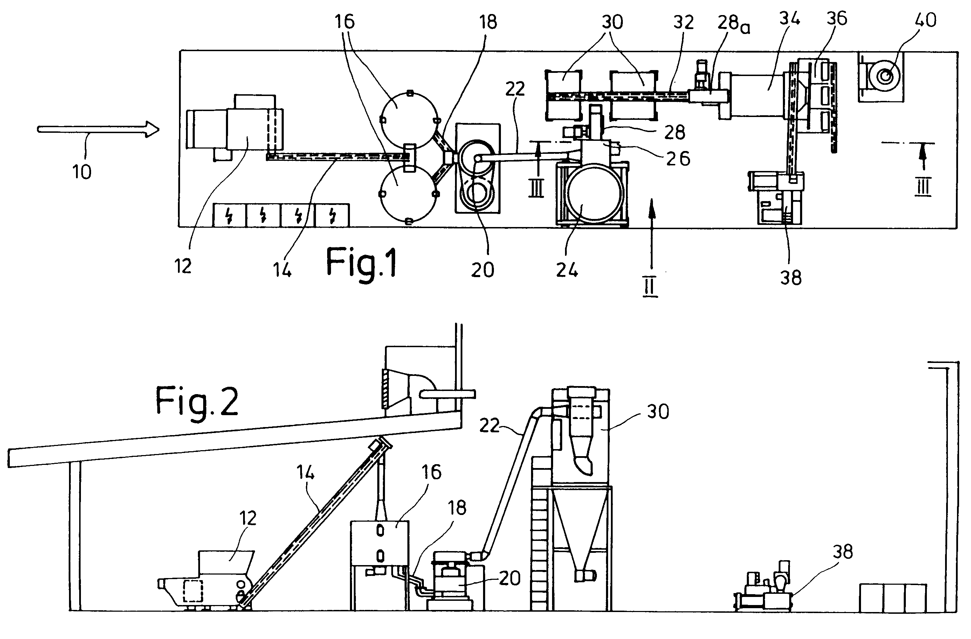

Gemäß Fig. 1 werden Verbundelemente 10 aus festen organischen und/oder anorganischen Verbundwerkstoffen -- wie Verbunden aus Metall/Metall, Kunststoff/Kunststoff, Metall/Kunststoff oder mineralischen Verbunden mit Metallen und/oder Kunststoffen -- durch Erzeugung von Feststoffpartikeln in einem Vorzerkleinerer 12 auf eine Korngröße von 5 bis 30 mm zerkleinert sowie über eine Schnecke 14 zur Dosierung Silobehältern 16 zugeführt. Aus diesen fördern Dosierschnecken 18 die entstandenen Feststoffpartikel zu einer Trenn- oder Aufschließeinheit 20, in der sie selektiv aufgeschlossen werden.

In der Trenn- oder Aufschließeinheit 20 werden die Verbundelemente 10 in ihre Bestandteile zerlegt sowie die abgelösten Schichten als Gemisch über Rohrleitungen 22 zu einem Zyklon-Filter 24 geführt, um über eine Zellenradschleuse 26 auf einen Elevator 28 zur Förderung des Gemisches der Komponenten in weitere Silos 30 zur Zwischenlagerung gefördert zu werden. Diesen ist eine Förderschnecke 32 nachgeschaltet, über die und einen weiteren Elevator 28ₐ das Gemisch in eine Siebeinrichtung 34 gelangt, in der das Gemisch einer Separation unterzogen wird.

Das nicht sortenreine Gemisch wird zur Separation dann Fließbettseparatoren 36 zugeführt. Die sortenreinen Komponenten werden von der Siebeinrichtung 34 bzw. den Fließbettseparatoren 36 zu einem Extruder 38 oder zu einer Absackstation 40 gebracht; die nun sortenrein vorliegenden Komponenten der Verbundelemente 10 werden der Verwertung zugeführt.

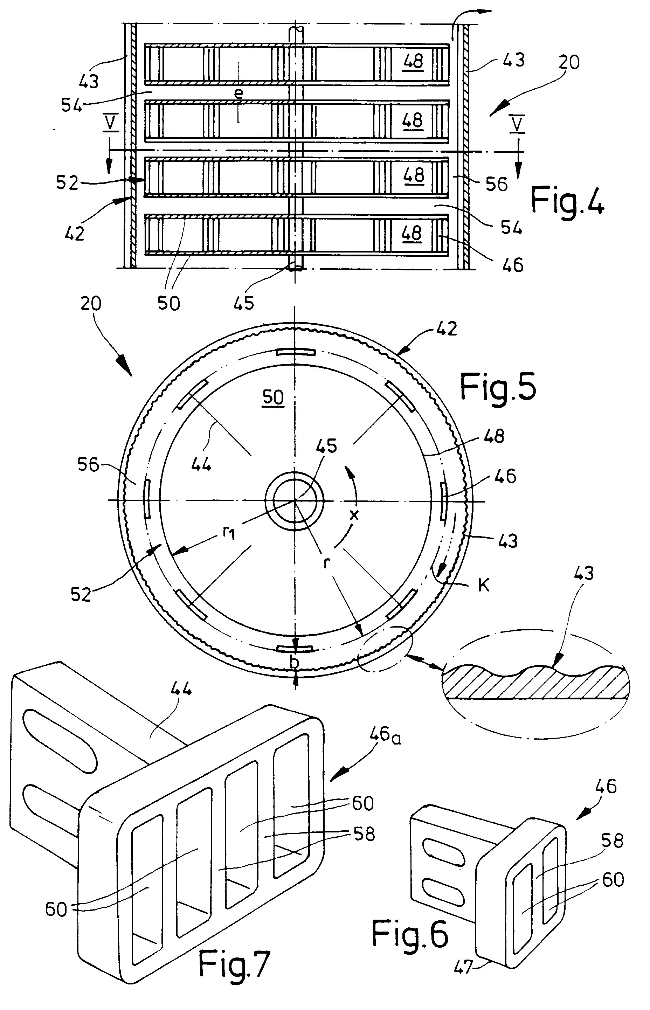

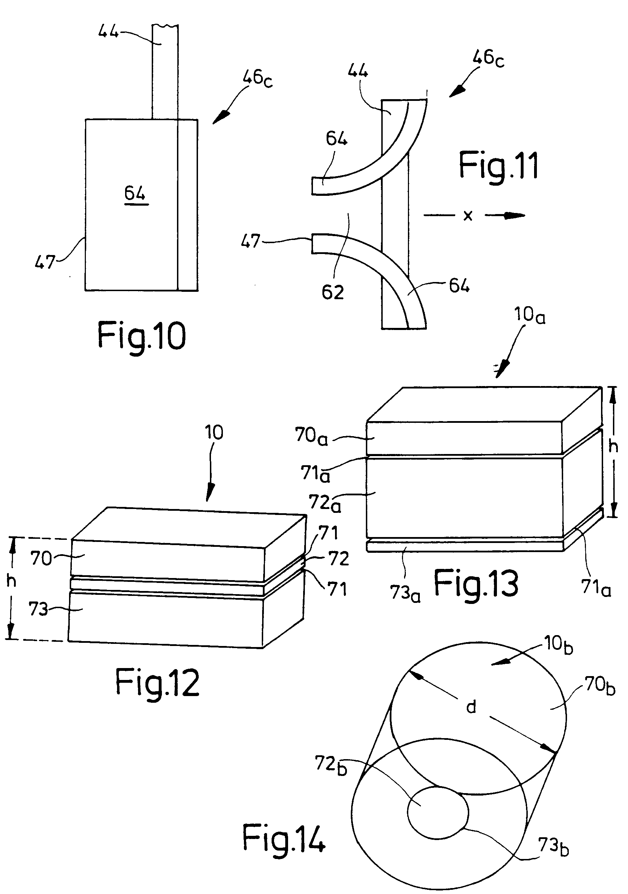

Die Trenn- oder Aufschließeinheit 20 enthält in Fig. 4 innerhalb eines zylindrischen Gehäuses 42 an Radialarmen 44 einer vertikalen angetriebenen Welle 45 Werkzeuge 46. Die Wandung 43 des Gehäuses 42 weist eine querschnittlich profilierte Innenfläche auf, beispielsweise in Fig. 5 eine Wellenform und in Fig. 9 einen sägezahnartigen Querschnitt.

Das als Stator dienende Gehäuse 42 begrenzt die eine Seite des Strömungsweges für das Gemisch aus Feststoffpartikeln und Trägerfluid, beispielsweise Luft; die andere Seite wird in den vier in Fig. 4 angedeuteten Etagen durch die Werkzeuge 46 begrenzt bzw. durch eine innerhalb des Konstruktionskreises K für die Werkzeugpositionen des Radius r liegende Rohrwand 48, die sich zwischen zwei in Abstand a zueinander vorgesehenen Tellern 50 jeder Etage erstreckt. Deren Radius ist mir r₁ bezeichnet und mißt das 5-bis 10-fache der Weite b eines schmalen Ringraumes 56, der sich innerhalb des Gehäuses 42 erstreckt.

Die Welle 45 bildet mit diesen von ihr abragenden Etagen aus Radialarmen 44, Werkzeugen 46, Rohrwand 58 und Tellern 50 einen Rotor 52, zwischen dessen Etagen die in Spaltabstand e benachbarten beiden Teller 50 einen Spaltraum 54 begrenzen.

Das Gemisch aus Feststoffpartikeln und Transportluft wird dem zwischen Stator 42 und Rotor 52 vorhandenen Ringraum 56 der tiefstliegenden Etage so zugeführt, daß es gegen die Drehrichtung x des Rotors 52 strömt. Dabei entsteht -- in Drehrichtung x -- hinter jedem Werkzeug 46, das eine Abrißkante 47 anbietet, ein Heckwirbel, wie er in Fig. 9 bei Q angedeutet ist. In diesem Heckwirbel Q wird der Gemischstrom abrupt beschleunigt, die Feststoffpartikel werden aneinandergerieben und dabei in ihre Komponenten aufgelöst. Dazu sind Umfangsgeschwindigkeit der Abrißkante 47, Prozeßtemperatur und Luftmengendurchsatz ebenso vorwählbar wie die Form der Wirbelbildung durch die Paarung Statorprofil / Werkzeugform.

Vor Eintritt in die nächste Etage kann sich der Gemischstrom in jenem Spaltraum 54 kurzzeitig ausdehnen, um dann in den nachgeordneten Ringraum 56 zu gelangen.

Werkzeugformen sind den Fig. 6 bis 9 zu entnehmen, wobei die einfachste -- eine in den Ringraum 56 ragende Radialplatte -- nicht wiedergegeben ist. Die in den Werkzeugen 46, 46ₐ, 46_{b} von Vertikalrippen 58 oder Wandstegen 59 begrenzten Durchbrüche bilden Kammern 60, welche die beschriebene Wirbelbildung verändern; durch die Auslegung der Werkzeuge werden die Intensitäten der enstehenden Verwirbelungen und somit die Wirkungen auf die Verbundelemente verändert (Beschleunigung, Aufprallenergie od. dgl.). Die Vertikalrippen 58 erzeugen vertikal nebeneinander gestreckte Kammern 60, die Wandstege 59 mehrere auch übereinander vorgesehene Kammern 60.

Das Werkzeug 46 der Fig. 10, 11 bietet zwei querschnittlich zueinander gekrümmte, einen Düsenspalt 62 begrenzende Radialprofile 64 an; der Gemischstrom wird hier bereits vor der Abrißkante 47 zusätzlich in einer zweiten Achse beschleunigt.

Einige Beispiele von Verbundelementen sollen das Verfahren weitergehend erläutern helfen.

### BEISPIEL 1:

Schichtaufbau eines Tubenlaminates als Verbundelement 10 in Fig. 12:

| | | |
|---|---|---|
| Komponente 70 | LPDE | 120 µm |
| Haftvermittler 71 | | |
| Komponente 72 | Aluminium | 25 - 40 µm |
| Haftvermittler 71 | | |
| Komponente 73 | LPDE | 180. |

Die gesamte Schichtdicke h mißt hier etwa 325 - 340 µm.

### BEISPIEL 2:

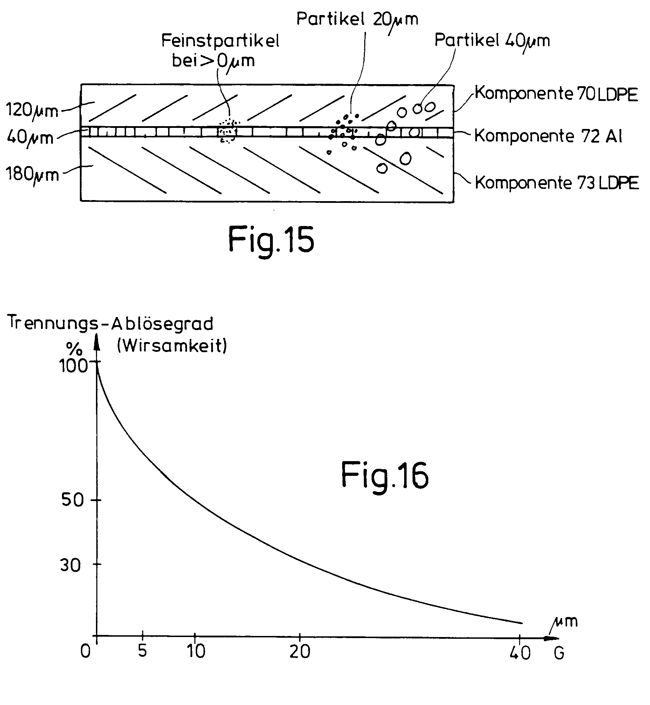

Schichtaufbau einer Armaturentafel eines Personenkraftwagens als Verbundelement 10ₐ in Fig. 13:

| | | |
|---|---|---|
| Komponente 70a | ABS | 1,2 mm |
| 2-Komponentenkleber 71a | | |
| Komponente 72a | PUR-Schaum | 3,5 mm |
| 2-Komponentenkleber 71a | | |
| Komponente 73a | PVC-Folie | 250 µm |

Die gesamte Schichtdicke h mißt hier etwa 4,95 mm.

### BEISPIEL 3:

Schichtaufbau von verkupferten Aluminiumdrähten als Verbundelement 10b in Fig. 14:

| | | |
|---|---|---|
| Komponente 70b: | PVC | 500 µm (Isolation) |
| Komponente 72b: | Aluminium | ⌀ 0,5 mm |
| Komponente 73b: | elektrochemischer Kupferauftrag | 9 µm |

Die gesamte Schichtdicke (Durchmesser d) mißt hier etwa 1009 µm.

Zu den obenstehenden Beispielen gelten die folgenden Betriebsparameter:

**TABELLE 1**

| **BETRIEBSPARAMETER** | | | |
|---|---|---|---|
| Produkt | Tubenlaminat Beispiel 1 | Armaturentafeln Beispiel 2 Index "a" | Aluminiumdraht Beispiel 3 Index "b" |
| Anzahl Schichten | 3 | 3 | 3 |
| Komponente 70 | LDPE | ABS | PVC |
| Komponente 72 | Aluminium | PUR-Schaum | Aluminium |
| Komponente 73 | LDPE | PVC-Folie | Kupfer |
| Schichtdicken | 70 120 µm | 1,2 mm | 300 µm |
| Schichtdicken | 72 25-40 µm | 3,5 mm | ⌀ 0,5 mm |
| Schichtdicken | 73 180 µm | 250 µm | 9 mm |
| gesamt | 325-340 µm | 4,95 mm | 1009 µm |
| Eintrittsbeschleunigung | 38 m/sec.² | 23 m/sec.² | 53 m/sec.² |
| Temperatur | 75°C | 30°C | 40°C |
| Umfangsgeschwindigkeit | 180 m/sec. | 72 m/sec. | 85 m/sec. |
| Laufmengendurchsatz | 5250 N m³/h | 8100 Nm³/h | 6320 N m³/h |

Die Schichtdicken der Komponenten liegen also zwischen 9 µm und 3,5 mm bzw. 3500 µm. Die Beschleunigung des Materials in der Trenn- oder Aufschließeinheit 20 beträgt zwischen 23 und 53 m/sec.², was einer Prozeßzeit von 0,015 bis 0,078 sec. entspricht.

Bei einer Umfangsgeschwindigkeit des Rotors 52 zum Stator 42 von 72 - 180 m/sec. erfolgt ein Luftmengendurchsatz zwischen 5250 - 8100 N m³/h bei einer Feststoffmenge von etwa 500 kg/h. Bei höheren Durchsätzen sind die Luftmengen linear zu erhöhen.

Das Verbundelement 10, 10ₐ, 10_{b} wird durch Freisetzung der unterschiedlichen physikalischen Eigenschaften der Verbundwerkstoffe -- insbesondere der Dichte, Reißdehnung, Rückstellkraft, Wärmeausdehnung und Wärmeübertragung sowie der Elastizität und der damit verbundenen molekularen Strukturunterschiede -- selektiv aufgeschlossen und die Adhäsionen der Verbundwerkstoffe untereinander aufgehoben.

Durch die Behandlung in der Trenn- oder Aufschließeinheit 20 erfolgt ein Aufschluss des Verbundelements 10, 10ₐ, 10_{b} in unterschiedlichste Strukturen, wobei sich die einzelnen Komponenten bezüglich Dimension und Geometrie infolge ihrer unterschiedlichen physikalischen Charakteristiken auch unterschiedlich verhalten.

Die Verbundelemente 10, 10ₐ, 10_{b} können vor dem Aufschluß verdichtet -- beispielsweise extrudiert -- werden. Es hat sich gezeigt, daß bei diesem selektiven Aufschluß die Bestandteile aus Polyethylen im wesentlichen unverändert bleiben, während metallische Bestandteile, beispielsweise aus Aluminium -- die vorher in flächiger Form vorlagen --in zwiebelartige Strukturen deformiert werden. Kunststoffverbunde, beispielsweise Polystyrol/Polyethylen, schließen sich ohne deutliche Deformation in unterschiedliche Strukturen auf mit erkennbaren Unterschieden in Bezug auf die Partikelgrößen; diese sind erheblich größer als die erwähnten Aluminiumzwiebelstrukturen.

Durch den selektiven Aufschluß werden die einzelnen Schichten des Verbundelements 10, 10ₐ, 10_{b} abgelöst, ohne daß die Schichtdicke der Komponenten verringert werden.

Einen Vergleich zwischen den Partikelgrößen der Verbundstoffe vor der Aufschließeinheit 20 (vorzerkleinert), dem selektiven Aufschluß und dem Austrag nach dem selektiven Aufschluß zeigt:

**TABELLE 2**

| Produkt | Tubenlaminat Beispiel 1 | Armaturentafeln Beispiel 2 Index "a" | Aluminiumdraht Beispiel 3 Index "b" |
|---|---|---|---|
| **Eintrag:******* | | | |
| Schichtdicke | ∼325-340 µm | ∼4.95 mm | ⌀ 1009 µm |
| Vorzerkleinert | 8 mm | 10 mm | 16 mm |
| Struktur | Flocken | Granulat | Zylinderform |

| **Austrag:******* | | | |
|---|---|---|---|
| Schichtdicken: | | | |
| Komponente 70 | 120 µm | 1.2 mm | 500 µm |
| Komponente 72 | ⌀100-180 µm | 3.5 mm | ⌀ 1.8 mm |
| Komponente 73 | 180 µm | 250 µm | ⌀ 47 µm |

| **Partikelgrößen:** | | | |
|---|---|---|---|
| Komponente 70 | 6.2 mm | 8.3 mm | 14 mm |
| Komponente 72 | ⌀ 150 - 180 µm | 3.9 mm | ⌀ 1.8 |
| Komponente 73 | 6.5 mm | 9.6 mm | ⌀ 47 µm |

| **Struktur:** | | | |
|---|---|---|---|
| Komponente 70 | Flocken | Chips | Rohr⌀ (aufgerissen) |
| Komponente 72 | Zwiebel | Granulat (kubisch) | Zwiebel |
| Komponente 73 | Flocken | Flocken | Zwiebel |

| | | | |
|---|---|---|---|
| * Mittelwerte | | | |

Bei diesem selektiven Aufschluß der Verbundelemente 10, 10ₐ, 10_{b} findet die Trennung der Komponenten in Abhängigkeit der physikalischen Unterschiede der Komponenten zueinander zwischen den jeweiligen Schichten statt. Bei einer Zerkleinerung erfolgt kein Aufschluß in Abhängigkeit der physikalischen Unterschiede.

Konventioneller Aufschluß der Verbundelemente geschieht --wie erwähnt -- auf eine Korn- bzw. Partikelgröße, die kleiner sein muß als die jeweilige Schichtdicke der Komponenten des Verbundelementes; dies soll Fig. 15 verdeutlichen.

Dabei entsteht eine Korngrößenverteilung, die nicht durch die Komponenten als solche, sondern durch die geforderte Partikelgröße gegeben ist z.B. 100 % < 300 µm. In Fig. 16 ist über der Aufschlußpartikelgröße G der Trennungs- oder Ablösegrad aufgetragen.

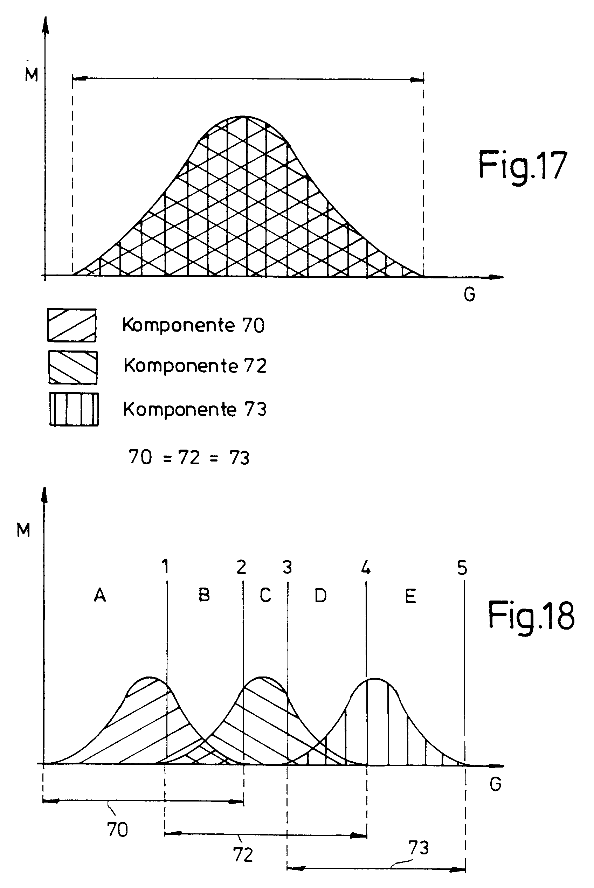

In dieser Korngrößenverteilung sind die Komponenten gemäß Fig. 17 (Menge M über der Partikelgröße G) in einer Bandbreite homogen verteilt.

Eine Separation kann somit nur bedingt auf einer Siebanlage erfolgen.

Erfordern die Schichtdicken eine feinste Vermahlung -- wie z.B. bei einem Tubenlaminat Aluminium 25 - 40 µm -- ergibt sich eine notwendige Partikelgröße von < 25 - 40 µm, um eine Separation vornehmen zu können.

Diese notwendige Partikelgröße wird zwangsläufig auch bei den anderen Komponenten wie LDPE erreicht. Eine Trennung der Komponenten wird hierdurch praktisch unterbunden, da die zur Trennung notwendigen Unterschiede fehlen.

Bei dem beschriebenen Verfahren liegen die Komponenten nunmehr in unterschiedlichen Partikelgrößen vor. Die Größenverteilung der Partikel ist entgegen einer Zerkleinerung (Feinvermahlung) -- wie Fig. 17 anhand eines Diagrammes der Mengen M über der Korn- bzw. Partikelgröße G verdeutlicht -- nicht überlagernd, sondern nebeneinanderliegend (Fig. 18).

Das unterschiedliche Aufschließ- bzw. Deformierungsverhalten der Komponenten bewirkt, daß sich die einzelnen Schichten voneinander ablösen, so daß darauffolgend eine Separation der Kunststoffe und der Metallteile möglich wird.

So werden etwa die großen Partikel in einem Sieb von den kleinen Partikeln getrennt, da die weniger stark aufgeschlossenen Produkte im Sieb verbleiben, während die kleineren Partikel die Maschen passieren.

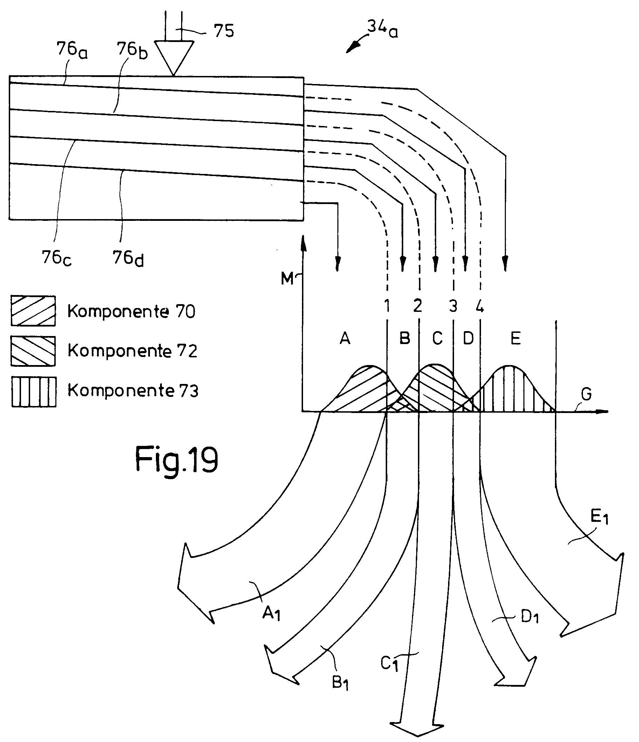

Diese Siebung erfolgt auf einer in Fig. 19 skizzierten Mehrdeckersiebanlage 34ₐ, deren Zulauf mit 75 bezeichnet ist und deren Sieblagen 76ₐ bis 76_{d} so ausgelegt werden, daß sie den Siebschnitten 1 bis 4 in Fig. 18 entsprechen, was eine weitgehende Separation der Komponenten ermöglicht. So liegen die Bereiche A, C und E bereits sortenrein vor (Strom A₁; C₁; E₁), die Ströme B₁, D₁ des Bereichs B (Schnittmenge Komponente 1/2) bzw. des Bereichs D (Schnittmenge Komponente 2/3) werden anschließend einer weiteren Separation auf Trenntischen und/oder auf einem Fließbett zugeführt, wobei die Strukturen, Dichten sowie geometrische und gravimetrische Unterschiede zur Trennung genutzt werden.

Sobald durch das Trennen eine Metall- und/oder Kunststofffraktion gewonnen ist, können die Fraktionen verdichtet werden. Dieses Verdichten erfolgt durch Agglomeration und/oder Extrusion.

## Patentansprüche

1. Verfahren zum Behandeln von Verbundelementen aus festen organischen und/oder anorganischen Verbundwerkstoffen wie Verbunden aus Metall/Metall, Kunststoff/Kunststoff, Metall/Kunststoff oder mineralischen Verbunden mit Metallen und/oder Kunststoffen durch Erzeugung von Feststoffteilen aus den Verbundelementen sowie Zugabe der Feststoffteile zu einem Transportfluid, wobei relativ zum Strom des Gemisches aus Feststoffteilen und Transportfluid wenigstens ein diesen Strom querendes Strömungshindernis als Wirbel bildende Abrißkante bewegt wird,
dadurch gekennzeichnet,
daß das Gemisch den Abrißkanten mit einer Beschleunigung von 20 bis 60 m/sec² zugeführt und in den Wirbeln eine das Gemisch beschleunigend aufschließende Bewegung hergestellt wird, daß während dieses Trenn- oder Aufschließvorganges die Adhäsion zwischen den Komponenten der Feststoffteile durch deren Kraft übersteigende Beschleunigungs- und Reibungskräfte aufgehoben wird sowie die Komponenten der Feststoffteile voneinander unter Trennung der Schichten des genannten Verbundwerkstoffes gelöst bzw. voneinander abgezogen werden.

2. Verfahren nach Anspruch 1, dadurch gekennzeichnet, daß das Lösen der Komponenten voneinander entlang der Phasengrenzen durchgeführt wird.

3. Verfahren nach Anspruch 1 oder 2, dadurch gekennzeichnet, daß die Komponenten der Feststoffpartikel während des Trenn- oder Aufschließvorganges unter Wärmezufuhr voneinander gelöst werden oder daß während des Trenn- oder Aufschließvorganges die Komponenten der Feststoffpartikel unter Flüssigkeits- und/oder Gaseintrag voneinander gelöst werden.

4. Verfahren nach einem der Ansprüche 1 bis ,3 gekennzeichnet durch eine Prozeßtemperatur während des Trenn- oder Aufschließvorganges zwischen 10° und 75° C, insbesondere etwa 30° bis 70°C, und eine Umfangsgeschwindigkeit an der Abrißkante zwischen 50 und 200 m/sec., insbesondere 70 bis 180 m/sec.

5. Verfahren nach einem der Ansprüche 1 bis 4, gekennzeichnet durch eine Beschleunigung der Feststoffpartikel zwischen 20 und 60 m/sec.², bevorzugt 23 und 53 m/sec.², einer Umfangsgeschwindigkeit zwischen 70 und 200 m/sec., bevorzugt 72 bis 180 m/sec, und einen Luftmengendurchsatz zwischen 5000 und 8500 Nm³/h während des Trenn- oder Aufschließvorganges, wobei gegebenenfalls der Luftdurchsatz 5000 bis 5600 Nm³/h, insbesondere etwa 5250 Nm³/h, oder Luftdurchsatz 6000 bis 7000 Nm³/h, insbesondere von etwa 6320 Nm³/h, beträgt.

6. Verfahren nach einem der Ansprüche 1 bis 5, gekennzeichnet durch eine Beschleunigung von 35 bis 40 m/sec², insbesondere etwa 38 m/sec², eine Temperatur von 70 bis 80°C, insbesondere etwa 75°C, sowie eine Umfangsgeschwindigkeit von 150 bis 200 m/sec, insbesondere etwa 180 m/sec, während des Trenn- oder Aufschließvorganges für ein Verbundelement hoher Flächenadhäsion, insbesondere für ein Tubenlaminat mit LDPE beschichteter Aluminiumfolie, wobei gegebenenfalls der Luftdurchsatz 5000 bis 5600 Nm³/h, insbesondere etwa 5250 Nm³/h beträgt.

7. Verfahren nach wenigstens einem der Ansprüche 1 bis 6, gekennzeichnet durch eine Beschleunigung von 20 bis 30 m/sec², insbesondere etwa 23 m/sec², eine Temperatur von 25 bis 35°C, insbesondere etwa 30°C, sowie eine Umfangsgeschwindigkeit von 68 bis 77 m/sec, insbesondere etwa 72 m/sec, während des Trenn- oder Aufschließvorganges für Innenbekleidungsschalen der Kraftfahrzeugindustrie, insbesondere für Armaturentafeln mit Bestandteilen ABS, PUR-Schaum, PVC-Folie, wobei gegebenenfalls der Luftdurchsatz 7800 bis 8500 Nm³/h, insbesondere etwa 8100 Nm³/h, beträgt.

8. Verfahren nach wenigstens einem der Ansprüche 1 bis 6, gekennzeichnet durch eine Beschleunigung von 48 bis 56 m/sec², insbesondere etwa 53 m/sec², eine Temperatur von 35 bis 45°C, insbesondere etwa 40°C, sowie eine Umfangsgeschwindigkeit von 80 bis 90 m/sec, insbesondere etwa 85 m/sec, während des Trenn- oder Aufschließvorganges für drahtförmiges Schichtmaterial, insbesondere für einen Aluminiumdraht mit Kupferschicht und PVC-Mantel, wobei gegebenenfalls der Luftdurchsatz 6000 bis 7000 Nm³/h, insbesondere von etwa 6320 Nm³/h, beträgt.

9. Verfahren nach wenigstens einem der Ansprüche 1 bis 8, bei dem das Verbundelement vor dem Trenn- oder Aufschließvorgang zerkleinert wird, dadurch gekennzeichnet, daß das Verbundelement auf eine Korngröße von 5 mm bis 30 mm zerkleinert wird.

10. Verfahren nach wenigstens einem der Ansprüche 1 bis 8, dadurch gekennzeichnet, daß das Verbundelement vor dem Trenn- oder Aufschließvorgang verdichtet wird.

11. Verfahren nach wenigstens einem der Ansprüche 1 bis 10, dadurch gekennzeichnet, daß der Austrag aus dem Trenn- oder Aufschließvorgang einem Separations- oder Siebvorgang unterzogen wird, wobei gegebenenfalls das Separieren auf Trenntischen und/oder durch Fließbettseparatoren durchgeführt wird.

12. Verfahren nach Anspruch 11, dadurch gekennzeichnet, daß die Metall- und/oder Kunststoffteile nach dem Separieren verdichtet werden oder extrudiert werden.

13. Vorrichtung zum Behandeln von Verbundelementen aus festen organischen und/oder anorganischen Verbundwerkstoffen wie Verbunden aus Metall/Metall, Kunststoff/Kunststoff, Metall/Kunststoff oder mineralischen Verbunden mit Metallen und/oder Kunststoffen, insbesondere zur Durchführung des Verfahrens nach wenigstens einem der Ansprüche 1 bis 12, bei der ein Strömungsweg (56) für ein aus dem/den Verbundelement/en hergestellte Feststoffpartikel tragendes Transportfluid von einer äußeren Wandung (43) sowie einer Schar von aufeinanderfolgenden, relativ zur Wandung bewegten Werkzeugen (46, 46ₐ bis 46_{c}) begrenzt ist und letztere jeweils in Strömungsrichtung zumindest eine Abrißkante (47) zur Erzeugung eines Wirbels (Q) aus dem Transportfluid und seiner Feststofffracht bilden, wobei die Werkzeuge (46, 46ₐ bis 46_{c}) auf einem einen Ringraum (56) als Strömungsweg bestimmenden Konstruktionskreis (K) in Abstand zueinander um eine sie drehende Welle (45) als Achse eines Rotors (52) innerhalb einer zylindrischen Wandung (43) eines Gehäuses als Stator (42) angeordnet sind sowie die Welle (45) wenigstens zwei Etagen von Werkzeugen (46, 46ₐ bis 46_{c}) aufweist, dadurch gekennzeichnet, daß jede Etage von Werkzeugen (46, 46ₐ bis 46_{c}) sowohl unterhalb als auch oberhalb der Werkzeuge eine diesen zugeordnete tellerartige Platte (50) sowie zwischen den beiden Platten nahe den Werkzeugen eine Rohrwand (48) aufweist, wobei zwischen jeweils zwei Etagen ein Spaltraum (54) vorgesehen ist.

14. Vorrichtung nach Anspruch 13, dadurch gekennzeichnet, daß die äußere Wandung (43) quer zur Strömungsrichtung profiliert ist.

15. Vorrichtung nach Anspruch 13 oder 14, dadurch gekennzeichnet, daß die Weite (b) des Ringraumes (56) etwa 20 % des Radius (r) des Konstruktionskreises (K) entspricht.

16. Vorrichtung nach einem der Ansprüche 13 bis 15, dadurch gekennzeichnet, daß die äußere Wandung (43) quer zur Strömungsrichtung profiliert ist, insbesondere zum Strömungsweg oder Ringraum (56) hin eine gewellte Oberfläche aufweist, deren Wellen etwa parallel zur Welle (45) des Rotors (52) ausgerichtet sind.

17. Vorrichtung nach einem der Ansprüche 13 bis 16, gekennzeichnet durch mehrere jeweils eine Kammer (60) umfangende Rahmen (59), von denen mehrere in Abstand zueinander das Werkzeug (46_{b}) bilden.

18. Vorrichtung nach einem der Ansprüche 13 bis 17, dadurch gekennzeichnet, daß das Werkzeug (46_{c}) zueinander gekrümmte Profile (64) enthält, die einen sich in Stromungsrichtung verjüngenden, diese querenden Spalt (62) bilden.

19. Vorrichtung nach wenigstens einem der Ansprüche 13 bis 18, dadurch gekennzeichnet, daß ihr ein Vorzerkleinerer (12) oder ein Verdichter vorgeordnet ist, und/oder daß ihr eine Siebeinrichtung (34) und/oder ein Fließbettseparator (36) nachgeordnet sind/ist, wobei der Siebeinrichtung (34) oder dem Fließbettseparator (36) gegebenenfalls ein Extruder (38) nachgeschaltet ist.

## Claims

1. Method of treating composite elements of solid organic and/or inorganic composite materials, such as metal/metal, plastic/plastic or metal/plastic composites or mineral composites with metals and/or plastics by producing solid particles from the composite elements and adding the solid particles to a conveying fluid, at least one flow obstacle traversing the flow of the mixture of solid particles and conveying fluid being moved relative to this flow as a separating edge forming eddies, characterised in that the mixture is fed to the separating edges at an acceleration of 20 to 60 m/sec² and a movement accelerating the breaking-down of the mixture is produced in the eddies, that the adhesion between the components of the solid particles is eliminated by accelerating and frictional forces exceeding its force during this separating or breaking-down process and the components of the solid particles are detached or released from one another, thereby separating the layers of the said composite material.

2. Method according to claim 1, characterised in that the components are detached from one another along the phase boundaries.

3. Method according to claim 1 or claim 2, characterised in that the components of the solid particles are detached from one another by heating during the separating or breaking-down process or that the components of the solid particles are detached from one another by the introduction of liquid and/or gas during the separating or breaking-down process.

4. Method according to one of claims 1 to 3, characterised by a process temperature during the separating or breaking-down process of between 10° and 75°C, in particular approximately 30° to 70°C, and a circumferential speed at the separating edge of between 50 and 200 m/sec, in particular 70 to 180 m/sec.

5. Method according to one of claims 1 to 4, characterised by an acceleration of the solid particles of between 20 and 60 m/sec², preferably 23 and 53 m/sec², a circumferential speed of between 70 and 200 m/sec, preferably 72 to 180 m/sec, and an air throughput of between 5000 and 8500 Nm³/h during the separating or breaking-down process, the air throughput optionally being 5000 to 5600 Nm³/h, in particular approximately 5250 Nm³/h, or the air throughput being 6000 to 7000 Nm³/h, in particular approximately 6320 Nm³/h.

6. Method according to one of claims 1 to 5, characterised by an acceleration of 35 to 40 m/sec², in particular approximately 38 m/sec², a temperature of 70 to 80°C, in particular approximately 75°C, and a circumferential speed of 150 to 200 m/sec, in particular approximately 180 m/sec, during the separating or breaking-down process for a composite element with high surface adhesion, in particular for a tube laminate with an LDPE-coated aluminium foil, the air throughput optionally being 5000 to 5600 Nm³/h, in particular approximately 5250 Nm³/h.

7. Method according to at least one of claims 1 to 6, characterised by an acceleration of 20 to 30 m/sec², in particular approximately 23 m/sec², a temperature of 25 to 35°C, in particular approximately 30°C, and a circumferential speed of 68 to 77 m/sec, in particular approximately 72 m/sec, during the separating or breaking-down process for internal casing shells in the automobile industry, in particular for dashboards with ABS, PU foam or PVC film components, the air throughput optionally being 7800 to 8500 Nm³/h, in particular approximately 8100 Nm³/h.

8. Method according to at least one of claims 1 to 6, characterised by an acceleration of 48 to 56 m/sec², in particular approximately 53 m/sec², a temperature of 35 to 45°C, in particular approximately 40°C, and a circumferential speed of 80 to 90 m/sec, in particular approximately 85 m/sec, during the separating or breaking-down process for wire-shaped laminated material, in particular for an aluminium wire with a copper layer and a PVC sheathing, the air throughput optionally being 6000 to 7000 Nm³/h, in particular approximately 6320 Nm³/h.

9. Method according to at least one of claims 1 to 8, in which the composite element is reduced in size prior to the separating or breaking-down process, characterised in that the composite element is reduced to a particle size of 5 mm to 30 mm.

10. Method according to at least one of claims 1 to 8, characterised in that the composite element is compacted prior to the separating or breaking-down process.

11. Method according to at least one of claims 1 to 10, characterised in that the discharge from the separating or breaking-down process is subjected to a separating or screening process, the separation optionally being carried out on separating tables and/or by fluidised-bed separators.

12. Method according to claim 11, characterised in that the metal and/or plastic particles are compacted or extruded after the separation.

13. Device for treating composite elements of solid organic and/or inorganic composite materials, such as metal/metal, plastic/plastic or metal/plastic composites or mineral composites with metals and/or plastics, in particular for carrying out the method according to at least one of claims 1 to 12, in which a flow path (56) for a conveying fluid carrying solid particles produced from the composite element or elements is delimited by an outer wall (43) and an assemblage of successive tools (46, 46ₐ to 46_{c}) moving relative to the wall and the latter form at least one separating edge (47) in the flow direction in order to produce an eddy (Q) from the conveying fluid and its solid load, the tools (46, 46ₐ to 46_{c}) being arranged at a distance from one another on a constructional circle (K) defining an annular space (56) as a flow path about a shaft (45) rotating them and forming the spindle of a rotor (52) within a cylindrical wall (43) of a housing forming a stator (42) and the shaft (45) having at least two rows of tools (46, 46ₐ to 46_{c}), characterised in that each row of tools (46, 46ₐ to 46_{c}) is provided both above and below the tools with a disc-shaped plate (50) associated therewith and between the two plates close to the tools with a tubular wall (48), a gap (54) being provided between every two rows.

14. Device according to claim 13, characterise in that the outer wall (43) is profiled transversely to the flow direction.

15. Device according to claim 13 or claim 14, characterised in that the width (b) of the annular space (56) corresponds to approximately 20 % of the radius (r) of the constructional circle (K).

16. Device according to one of claims 13 to 15, characterised in that the outer wall (43) is profiled transversely to the flow direction, in particular has a corrugated surface towards the flow path or annular space (56), its corrugations being substantially parallel to the shaft (45) of the rotor (52).

17. Device according to one of claims 13 to 16, characterised by a plurality of frames (59) each surrounding a chamber (60), a plurality of which at a distance from one another form the tool (46_{b}).

18. Device according to one of claims 13 to 17, characterised in that the tool (46_{c}) contains profiles (64) curved towards one another forming a gap (62) traversing the latter and tapering in the flow direction.

19. Device according to at least one of claims 13 to 18, characterised in that a preliminary size reduction unit (12) or a compactor is arranged upstream thereof, and/or that a screening means (34) and/or a fluidised-bed separator (36) is/are arranged downstream thereof, an extruder (38) optionally being arranged downstream of the screening means (34) or the fluidised-bed separator (36).

## Revendications

1. Procédé de traitement d'éléments composites constitués de matériaux composites solides organiques et/ou inorganiques, tels que des composites métal/métal, matière plastique/matière plastique, métal/matière plastique ou des composites minéraux avec des métaux et/ou des matières plastiques, consistant à produire, à partir des éléments composites, des particules de matières solides et à introduire les particules solides dans un fluide de transport, procédé dans lequel on déplace au moins un obstacle à l'écoulement, traversant ce courant, et constituant une arête de séparation formant des tourbillons, caractérisé en ce que le mélange est amené sur les arêtes de séparation avec une accélération de 20 jusqu'à 60 m/sec² et en produisant dans les tourbillons un déplacement désagrégeant le mélange de façon accélérée, en ce que pendant ce processus de séparation ou de désagrégation, l'adhérence entre les composants des particules solides étant neutralisée par des forces d'accélération et de friction qui dépassent la force d'adhérence et les composants des particules solides étant séparés ou arrachés l'un de l'autre par séparation des couches dudit matériau composite.

2. Procédé selon la revendication 1, caractérisé en ce que la séparation des composants l'un de l'autre est réalisée le long des limites des phases.

3. Procédé selon la revendication 1 ou 2, caractérisé en ce que les composants des particules solides sont séparés pendant le processus de séparation ou de désagrégation par apport de chaleur ou en ce que les composants des particules solides sont séparés l'un de l'autre pendant le processus de séparation ou de désagrégation par entrée de liquide et/ou de gaz.

4. Procédé selon l'une des revendications 1 à 3, caractérisé en ce que la température du processus pendant le processus de séparation et de désagrégation est comprise entre 10 et 75°C, en particulier entre environ 30°C jusqu'à 70°C, et la vitesse périphérique au niveau de l'arête de séparation est comprise entre 50 et 200 m/sec, en particulier de 70 jusqu'à 180 m/sec.

5. Procédé selon l'une des revendications 1 à 4, caractérisé par une accélération des particules solides entre 20 et 60 m/sec², de préférence 23 et 53 m/sec², par une vitesse périphérique entre 70 et 200 m/sec, de préférence de 72 jusqu'à 180 m/sec, et par un débit d'air entre 5000 et 8500 Nm³/h pendant le processus de séparation ou de désagrégation, le cas échéant, le débit d'air étant de 5000 jusqu'à 5600 Nm³/h, en particulier d'environ 5250 Nm³/h, ou le débit d'air est de 6000 à 7000 Nm³/h, en particulier d'environ 6320 Nm³/h.

6. Procédé selon l'une des revendications 1 à 5, caractérisé par une accélération de 35 à 40 m/sec², en particulier d'environ 38 m/sec², par une température de 70 à 80°C, en particulier d'environ 75°C, ainsi que par une vitesse périphérique de 150 à 200 m/sec, en particulier d'environ 180 m/sec, pendant le processus de séparation ou de désagrégation pour un élément composite présentant une adhérence superficielle plus importante, en particulier pour un stratifié en forme de tube avec une feuille d'aluminium revêtue de polyéthylène basse densité (LDPE), le débit d'air étant le cas échéant de 5000 à 5600 Nm³/h, en particulier d'environ 5250 Nm³/h.

7. Procédé selon au moins l'une des revendications 1 à 6, caractérisé par une accélération de 20 à 30 m/sec², en particulier d'environ 23 m/sec², par une température de 25 à 35°C, en particulier d'environ 30°C, ainsi que par une vitesse périphérique de 68 à 77 m/sec, en particulier d'environ 72 m/sec, pendant le processus de séparation et de désagrégation pour des coquilles de revêtement intérieur de l'industrie automobile, en particulier des plaques de garniture ayant des composants en ABS, en polyuréthanne expansé, en feuille de PVC, le débit d'air étant le cas échéant de 7800 à 8500 Nm³/h, en particulier d'environ 8100 Nm³/h.

8. Procédé selon au moins l'une des revendications 1 à 6, caractérisé par une accélération de 48 à 56 m/sec², en particulier d'environ 53 m/sec², une température de 35 à 45°C, en particulier d'environ 40°C, ainsi que par une vitesse périphérique de 80 à 90 m/sec, en particulier d'environ 85 m/sec, pendant le processus de séparation ou de désagrégation du matériau stratifié en forme de fil, en particulier pour un fil en aluminium avec une couche de cuivre et une gaine en PVC. le débit d'air étant le cas échéant de 6000 à 7000 Nm³/h, en particulier d'environ 6320 Nm³/h.

9. Procédé selon au moins l'une des revendications 1 à 8, dans lequel l'élément composite est réduit en petites particules avant le processus de séparation ou de désagrégation, caractérisé en ce que l'élément composite est réduit à une taille de particules de 5 mm à 30 mm.

10. Procédé selon au moins l'une des revendications 1 à 8, caractérisé en ce que l'élément composite est comprimé avant le processus de séparation et de désagrégation.

11. Procédé selon au moins l'une des revendications 1 à 10, caractérisé en ce que les matières évacuées après le processus de séparation et de désagrégation sont soumises à un processus de triage ou de tamisage, la séparation étant le cas échéant réalisée sur des tables de séparation et/ou au moyen de séparateurs à lit fluidisé.

12. Procédé selon la revendication 11, caractérisé en ce que les particules de métal et/ou de matière plastique sont comprimées ou extrudées après la séparation.

13. Dispositif pour le traitement d'éléments composites formés de matériaux composites solides organiques et/ou inorganiques, tels que des composites de métal/métal, matière plastique/matière plastique, métal/matière plastique ou des composites minéraux avec des métaux et/ou des matières plastiques, en particulier pour la réalisation du procédé selon au moins l'une des revendications 1 à 12, dans lequel un trajet d'écoulement (56) pour un fluide de transport portant des particules solides produites à partir du ou des éléments composites est délimité par une paroi extérieure (43) ainsi que par un système d'outils (46, 46a à 46c) se suivant les uns derrière les autres, déplaçés par rapport à la paroi, et dont chacun présente; dans la direction d'écoulement, au moins une arête de séparation (47) pour créer un tourbillon (Q) composé du fluide de transport et de sa charge de particules solides, les outils (46, 46a à 46c) étant disposés, à distance l'un de l'autre, sur un cercle structurel (K) déterminant un espace annulaire (56) comme trajet d'écoulement, autour d'un arbre (45) les mettant en rotation, constituant l'axe d'un rotor (52) à l'intérieur d'une paroi cylindrique (43) d'une enveloppe constituant le stator (42), l'arbre (45) présentant au moins deux étages d'outils (46, 46a à 46c), caractérisé en ce que chaque étage d'outils (46, 46a à 46c) présente une plaque en forme d'assiette (50) disposée en dessous ainsi qu'au-dessus des outils en étant associée à ces derniers, et présente une paroi tubulaire (48) entre les deux plaques à proximité des outils, un espace de faible hauteur (54) étant prévu dans chaque cas entre deux étages.

14. Dispositif selon la revendication 13, caractérisé en ce que la paroi extérieure (43) est profilée transversalement à la direction d'écoulement.

15. Dispositif selon la revendication 13 ou 14, caractérisé en ce que la largeur (b) de l'espace annulaire (56) correspond à environ 20 % du rayon (r) du cercle structurel (K).

16. Dispositif selon l'une des revendications 13 à 15, caractérisé en ce que la paroi extérieure (43) est profilée transversalement par rapport à la direction d'écoulement, et présente, en particulier par rapport au trajet d'écoulement ou à l'espace annulaire (56), une surface ondulée, dont les ondes sont dirigées presque parallèlement à l'arbre (45) du rotor (52)

17. Dispositif selon l'une des revendications 13 à 16, caractérisé par une pluralité de cadres (59) entourant chacun une chambre (60), et dont plusieurs, situés à distance l'un de l'autre, formant l'outil (46b).

18. Dispositif selon l'une des revendications 13 à 17, caractérisé en ce que l'outil (46c) présente des profils (64) incurvés, dirigés l'un vers l'autre, et qui forment un intervalle (62) qui s'effile selon la direction d'écoulement le traversant.

19. Dispositif selon au moins l'une des revendications 13 à 18, caractérisé en ce qu'il est précédé d'un concasseur (12) ou d'un organe de compression, et/ou en ce qu'il est suivi d'un organe de tamisage (34) et/ou d'un séparateur à lit fluidisé (36). l'organe de tamisage (34) ou le séparateur à lit fluidisé (36) étant le cas échéant suivi d'une extrudeuse (38).
